# EUROPEAN PATENT APPLICATION

(11) **EP 4 418 601 A1**
(43) Date of publication of application: **21.08.2024**
(21) Application number: 24156512.6
(22) Date of filing: 08.02.2024
(51) Int. Cl.: H04L 5/14, H04B 17/00, H04W 52/00

(54) **METHODS FOR SBFD-UE REPORTING ON FULL-DUPLEX SOFT CONSTRAINTS AND SINR LOSS**

(30) Priority: 16.02.2023 US 202363485266 P; 05.02.2024 US 202418432117
(71) Applicant: MediaTek Singapore Pte. Ltd., Singapore 138628 (SG)
(72) Inventor: NEMETH, Jozsef Gabor, Cambourne, Cambridge (GB); AL-IMARI, Mohammed S Aleabe, Cambourne, Cambridge (GB); BOIXADERA-ESPAX, Francesc, Cambourne, Cambridge (GB)
(74) Representative: Pfenning, Meinig & Partner mbB

(57) **Abstract**

Techniques pertaining to subband full duplex (SBFD) user equipment (UE) reporting soft constraints on full-duplex scheduling to network nodes are described. Such techniques include establishing full-duplex communication between a UE and a network node such that the UE is able to transmit data to the network node and receive data from the network node simultaneously in time. The techniques further include reporting by the UE to the network node, information that includes a signal-to-Interference-plus-noise ratio (SINR) loss and one or more soft constraints on a full-duplex scheduling of communication resources that is performed by the network node for the UE during the full-duplex communication.

## Description

### CROSS REFERENCE TO RELATED PATENT APPLICATION(S)

The present disclosure is part of a non-provisional application claiming the priority benefit of U.S. Patent Application No. 63/485,266, filed 16 February 2023, the content of which herein being incorporated by reference in its entirety.

### TECHNICAL FIELD

The present disclosure is generally related to mobile communications and, more particularly, to techniques for user equipment (UE) configuration and scheduling in subband full duplex (SBFD) networks.

### BACKGROUND

Unless otherwise indicated herein, approaches described in this section are not prior art to the claims listed below and are not admitted as prior art by inclusion in this section.

In 3GPP Release 19, SBFD-UEs are full-duplex, meaning that such UEs are able to transmit and receive data simultaneously over resources that overlap in time. Prior to 3GPP Release 19, UE are half-duplex, this means while gNodeBs are able to transmit and receive data simultaneously at any given time, UEs capable of only transmitting or receiving data at any given time. Thus, SBFD-UEs under 3GPP Release 19 are able to provide higher maximum user throughput with two-way data and lower latency. Additionally, such SBFD-UEs may also provide extra hybrid automatic repeat-request (HARQ) downlink (DL) retransmission opportunities with downlink packets. These advantages may be especially useful in latency-critical applications, such as video streaming in virtual reality (VR) or extended reality (XR) environments.

Under Release 19, the gNodeBs may use frequency-domain resource allocation (FDRA), i.e., full-duplex scheduling, to schedule resources for the SFBD-UEs such that the UEs are able to communicate with the gNodeBs. For example, FDRA may be used to allocate an uplink (transmit) subband of a carrier frequency to a UE for the UE to transmit data to the gNodeB and a downlink (receive) subband of a carrier frequency to the UE For the UE to receive data from the GNodeB, in which the transmit and the receive of the data occur in the same symbol in time. Further, the uplink subband and the downlink subband may be separated by a self-interference cancellation (SIC) guardband of the carrier frequency to guard against harmful interference between the uplink subband and the downlink subband. Thus, the FDRA parameters may form a triplet that is in the form of (TX bandwidth, SIC-guardband, RX bandwidth).

However, full-duplex SBFD-UEs may experience issues in some scenarios. For example, residual errors of self-interference cancellation may cause the signal-to-Interference-plus-noise ratio (SINR) degradation in full-duplex operations in comparison to half-duplex operations. In other words, as long as the transmit (TX) power level of a UE is not too high (e.g., around one decibel (dB)), the SINR loss target, i.e., performance loss, may only exhibit small variations. However, when the transmit power rises above a certain power level (e.g., the admissible transmit power (ATP)), the SINR loss may increase ever more rapidly. The ATP, expressed in decibel-milliwatts (dBm), is the upper bound of transmit power for which a SINR loss target is guaranteed. Operations at transmission power levels above a level delimited by the ATP are generally spectrally inefficient and atypical. The ATP value may vary according to the instantaneous channel conditions and the scheduled FDRA. For example, the ATP value may temporally vary based on the downlink (DL) signal conditions via automatic gain control (AGC) and the reference SINR) and the Tx-Rx echo level. As a result, maintaining the SINR loss target may be challenging for high TX power levels, low DL signals of interest, and/or low background inference levels when the UE is not transmitting.

Accordingly, there is a need for a solution that enables UEs to provide useful information that assists gNodeBs in performing full-duplex resource allocation to the UEs while minimizing SINR degradation.

### SUMMARY

The following summary is illustrative only and is not intended to be limiting in any way. That is, the following summary is provided to introduce concepts, highlights, benefits, and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to propose solutions or schemes that address the issue(s) described herein. More specifically, various schemes proposed in the present disclosure are believed to provide solutions involving techniques for UE configuration and scheduling in SBFD networks.

In one aspect, a method may include establishing full-duplex communication between a UE and a network node such that the UE is able to transmit data to the network node and receive data from the network node simultaneously in time. The method may further include reporting by the UE to the network node information that includes a SINR loss and one or more soft constraints on a full-duplex scheduling of communication resources that is performed by the network node for the UE during the full-duplex communication.

In another aspect, an apparatus implementable in a network as a UE may include a transceiver and a processor coupled to the transceiver. The transceiver may be configured to communicate wirelessly. The processor may be configured to establish full-duplex communication between the UE and a network node such that the UE is able to transmit data to the network node and receive data from the network node simultaneously in time. Subsequently, the processor may be configured to report to the network node information that includes a SINR loss and one or more soft constraints on a full-duplex scheduling of communication resources that is performed by the network node for the UE during the full-duplex communication.

It is noteworthy that, although the description provided herein may be in the context of certain radio access technologies, networks, and network topologies such as 5G/NR/Beyond Fifth-Generation (B5G) mobile communications, the proposed concepts, schemes and any variation(s)/derivative(s) thereof may be implemented in, for and by other types of radio access technologies, networks and network topologies such as, for example and without limitation, Long-Term Evolution (LTE), LTE-Advanced, LTE-Advanced Pro, Internet-of-Things (IoT), Narrow Band Internet of Things (NB-IoT), Industrial Internet of Things (IIoT), vehicle-to-everything (V2X), and non-terrestrial network (NTN) communications. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram of an example network environment in which various proposed schemes in accordance with the present disclosure may be implemented.
FIG. 2 illustrates some aspects of an example proposed scheme in accordance with the present disclosure.
FIG. 3 illustrates some additional aspects of an example proposed scheme in accordance with the present disclosure.
FIG. 4 is a block diagram of an example communication system in accordance with an implementation of the present disclosure.
FIG. 5 is a flowchart of an example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that the description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to techniques for UEs to report SINR loss and soft constraints on full-duplex scheduling to network nodes, such as gNodeBs. According to the present disclosure, a number of possible solutions may be implemented separately or jointly. That is, although these possible solutions may be described below separately, two or more of these possible solutions may be implemented in one combination or another.

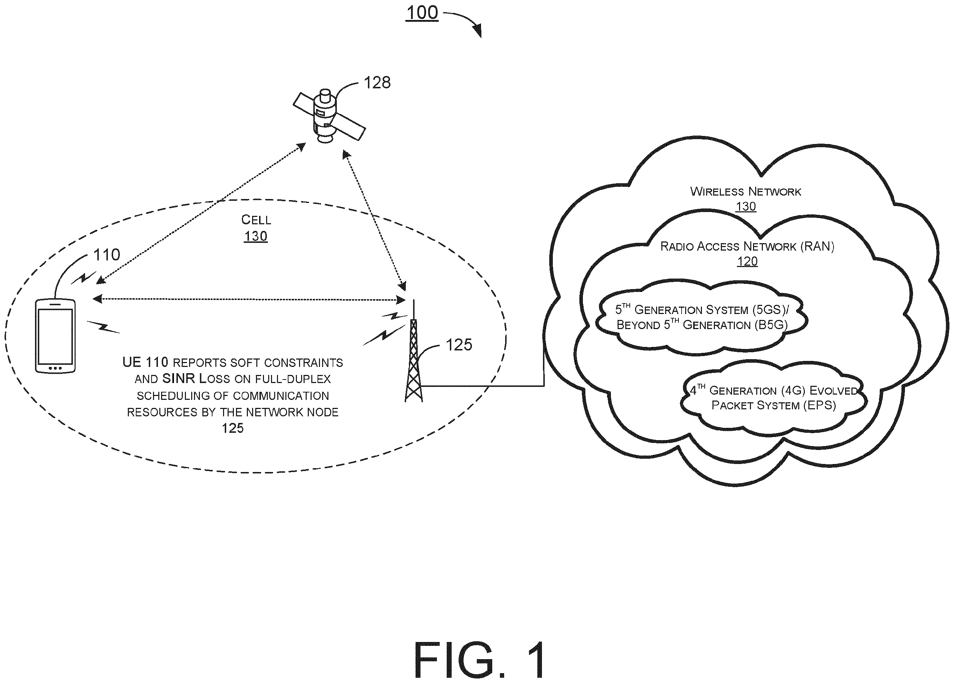

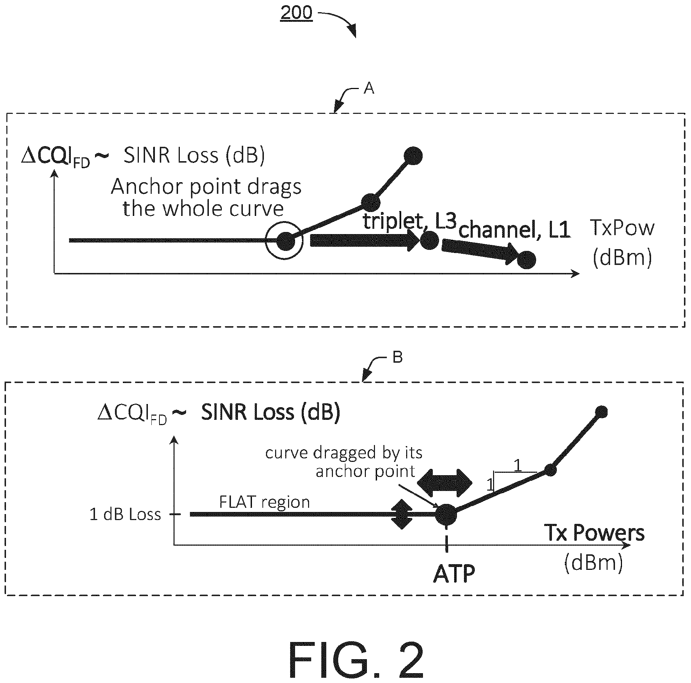

FIG. 1 illustrates an example network environment 100 in which various solutions and schemes in accordance with the present disclosure may be implemented. FIG. 2 - FIG. 5 illustrate examples of implementation of various proposed schemes in network environment 100 in accordance with the present disclosure. The following description of various proposed schemes is provided with reference to FIG. 1 - FIG. 5. As used in the following description, Layer-1 level refers to the physical layer in the 3GPP standard, Layer-2 level refers to the media access control (MAC) layer in the 3GPP standard, Layer-3 level refers to the radio resource control (RRC) layer in the 3GPP standard. Furthermore, when soft constraints result from reporting at two different layers, the layers may be distinguished as lower and higher levels/layers.

As shown in FIG. 1, network environment 100 may include a UE 110 in wireless communication with a RAN 120 (e.g., a 5G NR mobile network, a B5G mobile network, or another type of network such as an NTN). UE 110 may be in wireless communication with RAN 120 via a network node 125 (e.g., an eNodeB, gNodeB, or transmit-receive point (TRP)). RAN 120 may be a part of a network 130. In network environment 100, UE 110 and network 130 (via network node 125 of RAN 120) may implement various schemes pertaining to techniques for UE SINR loss and soft constraint reporting in SBFD networks, as described below.

For many SBFD-UE implementations, a UE may need to impose soft constraints on the full-duplex communication resource allocation, i.e., the FDRA performed by a network node, such as a gNodeB. A soft constraint is a gradual change in a parameter value (e.g., bandwidth) that causes a predictable gradual change in the ATP. For example, as a transmission bandwidth is increased, the value of the ATP may gradually decrease. In another example, as a SIC-guardband becomes wider, the value of the ATP may gradually increase.

Furthermore, in order to reduce SINR degradation in full-duplex operations in comparison to half-duplex operations, the link adaption feature in a gNodeB may need to be informed of the expected SINR loss so that the link adaption feature may decrease the half-duplex modulation and coding scheme (MCS), at least on the receive (Rx) symbols that overlap with the TX symbols, when in full-duplex mode to increase the robustness. This requires the UE to predict and report a difference between the full-duplex and the half-duplex channel quality indicator (CQI), i.e., the delta-CQI_FD (ΔCQI_{FD}). Furthermore, the scheduler of the gNodeB may need to restrict TX power by lowering the uplink (UL) throughput to keep the SINR loss below the target dB, e.g., one dB. This requires the UE to determine and report the ATP.

Accordingly, a reporting framework that enables SBFD-UEs, such as the UE 110, to provide information to a gNodeB, such as the network node 125, may need to have several characteristics. For example, the reporting framework needs to use simple reporting metrics that are not specific to any particular UE implementation. Further, the reporting needs to be timely yet has low resource utilization and low UE overhead complexity. Thus, in a particular reporting scheme, the balancing of low over vs. timeliness may result in a decomposition of the reporting into multiple reporting components: (1) a non-time critical reporting that uses Layer-3 messages that have relatively long latency (e.g., RRC latency of 10 (milliseconds (ms)); and (2) time-critical reporting that uses Layer-1 (L1) messaging and/or Layer-2 (L2) messaging. An example of non-time critical reporting may be when the UE 110 reports to the network node 125 how the ATP will behave in response to different FDRA triplets, e.g., an ATP offset for multiple (TX bandwidth, SIC-guardband, RX bandwidth)-triplets. Examples of information that is reported via the time-critical reporting may include channel conditions, ΔCQI_{FD}, ATP temporal variations caused by AGC gain switching or TX-RX echo, or other small payloads that can be frequently updated without large overhead. This enables the latency of the time-critical reports to be on par with channel state information (CSI) reporting and/or AGC reporting.

As shown in Part (A) of FIG. 2, the information reported by the UE 110 to the network node 125 may include characteristics over Tx power level that can be visualized in a ΔCQI_{FD} ~ SINR Loss (dB) vs. TX power level graph. These characteristics, which can serve as soft constraints, may be reported as a piecewise linear function or a function and parameterized by an anchor point ATP shown in the graph. The baseline line curve shown in Part (A) may include a group of representative points (e.g., three or four representative points) that are to be reported once and/or updated and reported infrequently using Layer-3 (L3) messaging. Furthermore, as shown in Part (B), different TX bandwidth, SIC-guardband, RX bandwidth)-triplets, i.e., FDRA-triplets, may cause different quasi-static shifts along the TX power level axis, resulting in ATP offsets, in which each ATP offset may serve as a starting point for further adjustments. The UE 110 may predict an ATP offset based on a-priori or initial calibration.

Additionally, variations in channel conditions may shift the characteristics further along the ΔCQI_{FD} (vertical) and the Tx power level (horizontal) axes. In such instances, the UE 110 may predict such an ATP variation based on a DL signal level, a background interference level without transmission, and/or a Tx-Rx echo level. Accordingly, the ATP baseline may be offset as follows: ATP baseline + ATP offsets + ATP temporal variation = ATP, which is capped by P_{CMAX}, in which K is the index of a corresponding FDRA-triplet, and P_{CMAX} is defined in the 3GPP standard. Furthermore, ATP offsets plus ATP temporal variation equals a horizontal shift to the baseline function of the baseline curve. Thus, on entering the RRC connected mode, the UE 110 may report at L3 a list of triplets together with the ATP offset corresponding to each triplet. In some instances, infrequent refresh of the ATP offset may occur. In turn, the network node 125 may interpolate an estimated ATP offset for any arbitrary triplet in the scheduling. Finally, an ATP variation may be reported at L1 before full-duplex TX & Rx, in which the ATP variation can be verified and recalibrated as needed after reporting.

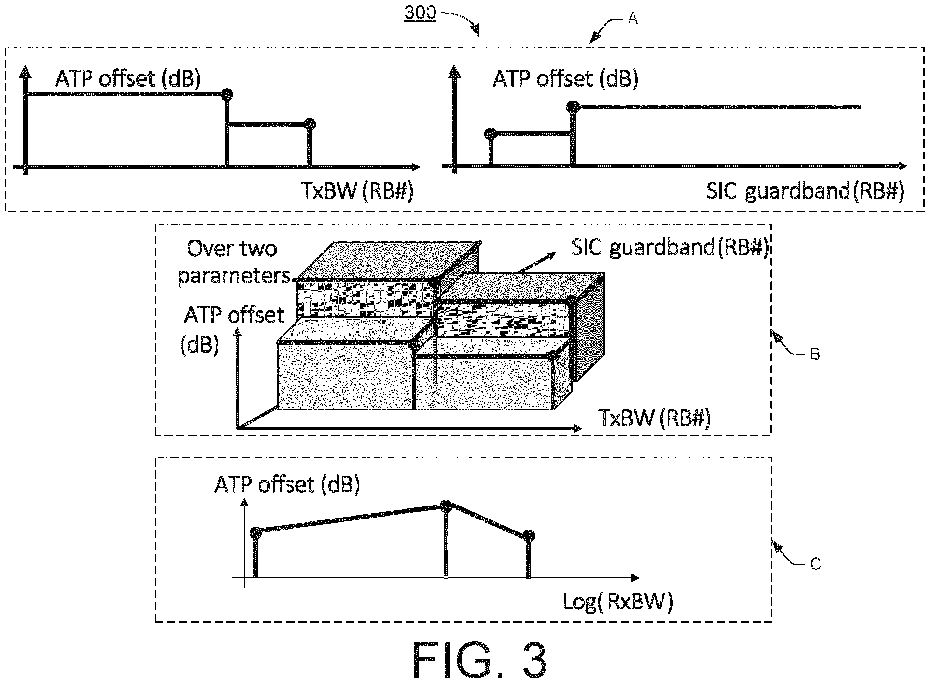

The network node 125 may interpolate an ATP to any FDRA scenario based on the reports from a UE, such as the UE 110. The network node 125 may receive a list of triplets along with the respect ATP offsets. For example, the network node 125 may receive the following triplet and corresponding ATP offset: (TxBW: any, RxBW: any, GB: 12 RBs) → ATP Offset: 10 dB, in which "any" means any value. As shown in Part (A) FIG. 3, assuming that the UE 110 reports two such triplets and corresponding ATP offsets, the network node 125 may interpolate an ATP offset to an arbitrary triplet used in the scheduling as follows: (1) For the TxBW, zero-order interpolation is performed downwards; (2) for the GB, zero-order interpolation is performed upwards; and (3) for the RxBW: first-order (i.e., linear) interpolation is performed as RxBW influence may be non-monotonous. As shown in Part (B), the application of one-dimensional rules (1) and (2) to the two triplets may be extended to two-dimensional interpolations. Additionally, the result of the first-order interpolation in (3) is illustrated in Part (C). In alternative embodiments, rather than perform such interpolations, the network node 125 may provide an FDRA triplet to a UE 110 to query the UE 110 for an ATP offset.

Nevertheless, in various embodiments, the reporting framework used for reporting by a UE (e.g., 110) to a gNodeB (e.g., network node 125) may use other example reporting schemes that may be less or more complex than the default reporting scheme. These example reporting schemes and the default reporting scheme, listed in order of increasing complexity, are as follows: (1) no reporting by the UE is required when the UE meets a fixed maximum SINR loss target, such as less than one dB; (2) UE only reports ΔCQI_{FD} with ATP assume to be PC_{MAX} for all circumstances; (3) UE only reports minimum SIC guardband or reports the minimum SIC guardband along with the ΔCQI_{FD} with ATP assumed to be PC_{MAX} for all circumstances; (4) the particular reporting scheme described above; (5) the particular reporting scheme plus different interpolation for ATP between reference triplets; (6) the particular reporting scheme plus reporting report shift of each representative point separately at L3; (7) the particular reporting scheme plus an L1 report per group of triplets or selected triplets; and (8) the particular reporting scheme plus activation index reported at L1 selects between options provided in the L3 report.

In order to implement one or more of these example reporting schemes, the reporting framework may use one or more proposed reporting procedures. In a first proposed procedure, an SBFD-UE may report the expected SINR loss caused by residual self-interference when receiving and transmitting on overlapping symbols. In a first implementation, the SINR Loss is expressed as a differential quantity, referred to as a wide-band delta-CQI-FD, or a full-duplex differential channel quality indicator, that indicates a degradation with respect to the wide-band CQI indicated for half-duplex operation. In a second implementation, as an alternative or in addition to the wide-band delta-CQI-FD, the SINR Loss may also be expressed as a differential quantity that indicates a degradation with respect to the narrow-band CQI indicated for half-duplex operation. For example, this may require sending a vector of quantities per subbands with (the first implementation) or without (the second implementation) a common base value. In the first implementation, all values are differentiated with respect to the respective narrow-band CQI decreased by the common base value. In some embodiments, the delta-CQI is calculated for specific Tx and Rx resource allocation bandwidths and the frequency separation between them.

Furthermore, the expectation is that a UE's prediction is based on the input parameters and an a-priori or initial calibration. The input parameters may comprise signal condition parameters and FDRA parameters. For example, the signal condition parameters may comprise the DL signal level at the low noise amplifier (LNA) input, the DL signal level at the baseband, the AGC state, and/or the interference levels without simultaneously transmitting, i.e., without self-interference. The FDRA parameters may include the uplink Tx allocated bandwidth (TxBW), the Rx allocated bandwidth (RxBW), and/or the SIC guardband bandwidth.

Accordingly, the UE may estimate an upper bound of SINR Loss, also known as the delta-CQI function, as a piecewise linear function or a B-spline function of the total transmit power level (dBm) of the UE, and reports the representative points (i.e., representative points) of this function. In one embodiment, the report is made at Layer-3 (RRC) level. In an alternative embodiment, the reporting is made at the Layer-2 (MAC) level. In some instances, the function is assumed to be flat over Tx power below the first representative point, e.g., in relation to the ATP. However, in other instances, the function is assumed to be flat over Tx Power after the last representative point.

In some embodiments, the function may be parametrized by one or more translations, where each translation can be either horizontal (along the Tx power axis) or vertical (along the CQI or SINR Loss axis), or both. Furthermore, the function may be parametrized by one or more translations acting separately. For example, the function may be parameterized by a translation acting on all representative points of the function. In an alternative example, the function may be parameterized by a translation acting on a set of one or more representative points that have been reported (e.g., in relation to the ATP), in which the translation of the one or more representative points influences the interpolation. For both examples, each translation may be reported at Layer-1 (PHY) or at Layer-2 (PHY).

In other embodiments, the function may be parametrized by two or more translations that are applied in sequence. For example, the function may be parameterized by a sum of translations acting on all representative points of the function, or parameterized by a sum of translations acting on a set of one or more representative points that has been reported (e.g., in relation to the ATP), in which the translation of the one or more representative points influences the interpolation. In some embodiments, one or more translations may be reported at Layer-1 (PHY), and such reporting may be performed in combination with the reporting of one or more other translations at Layer-3 or Layer-2. In other embodiments, one or more translations may be reported at Layer-2 (PHY), and such reporting may be performed in combination with the reporting of one or more other translations at Layer-3.

In some implementations, the UE may report multiple versions of the representative points defining the function and/or its translations together with a respective combination of FDRA parameters per each version. Such parameters may include the transmission allocated bandwidth (TxBW), the reception allocated bandwidth (the RxBW), the frequency separation between the closest edges of the two allocations (the SIC guardband), their logarithms, sums, and/or differences defined in terms of them. In some instances, the TxBW includes frequency hopping. The reporting of such multiple versions may occur at Layer-3 or Layer-2. For example, the following tuple may describe a constraint: (TxBW: 10 RBs, SIC GB: 12 RBs, RxBW: 20 RBs, translation by one dB horizontally), meaning that the function is obtained by translating the baseline function by one dB along the Tx power axis for scheduling scenarios in which TxBW is 10 RBs, SIC GB is 12 RBs, and RxBW is 20 RBs. However, further translations are not precluded. In one embodiment, only one parameter is considered: e.g., the SIC guardband. In another embodiment, only two parameters are considered: e.g., the TxBW and the SIC guardband. For certain parameters, the values may be restricted to a predefined set, e.g., 1 RB, 2 RBs, 4 RBs, 8 RBs, etc. In various implementations, the parameters may be reported in RBs or in MHz.

In some instances, one or more of the parameters can take the value of "any", indicating that the respective function value or translation value reported together with this parameter is valid for any value of the particular parameter. For example, the following tuple describes a valid constraint (TxBW: any RBs, SIC GB: 12 RBs, RxBW: any, translation by 1 dB horizontally), meaning that the function is obtained by translating the baseline function by one dB along the Tx Power axis for scheduling scenarios where SIC GB: 12 RBs. However, further translations are not precluded.

Accordingly, the reported CQIs per multiple versions of the FDRA parameter combinations may provide, by application of predefined interpolation rules, reliable indications on the performance of FDRA parameter combinations outside the reported set. In various embodiments, the predefined interpolation rules may include a first interpolation rule that assumes that between two reported points, the partial derivative of CQI with respect to TxBW is constant, a second interpolation rule that assumes that between two reported points, the partial derivative of CQI with respect to RxBW is constant, a third interpolation rule that assumes that between two reported points, the partial derivative of CQI with respect to SIC GB is constant, and/or a fourth interpolation rule that assumes that the performance, i.e., CQI is piecewise constant when only a single parameter changes. Furthermore, the reported CQI points may be representative points of a tensor product B-spline interpolation, and/or the ATP may stay the same for all versions of the FDRA parameters.

Alternatively, or concurrently, the reported CQIs per multiple versions of the FDRA parameter combinations provide, by application of one or more additional predefined rules, reliable indication on the performance for FDRA parameter combinations outside the reported set. In various embodiments, the predefined additional rules may include a first additional rule that assumes that between two reported points, the partial derivative of the ATP with respect to TxBW is constant, a second additional rule that assumes that between two reported points, the partial derivative of the ATP with respect to RxBW is constant, a third additional rule that assumes that between two reported points, the partial derivative of ATP with respect to SIC GB is constant, and a fourth additional rule that assumes that the ATP is piecewise constant when only a single parameter changes. Furthermore, the reported ATP points may be representative points of a tensor product B-spline interpolation, and/or the SINR Loss or delta-CQI may stay the same for all versions of the FDRA parameters. However, other information may need to be reported when the CQI and the ATP are unpredictable. For example, when the CQI and the ATP are unpredictable below the lowest SIC guardband parameter that the UE reports on, a minimum SIC guardband may need to be specified. In another example, when the CQI and the ATP are unpredictable above the highest TxBW parameter that the UE reports on, a maximum TxBW may need to be specified.

In additional implementations, a network node, e.g., a gNodeB, may specify a list of frequency-domain parameters for the UE to report on CQI, ATP, or translation value with respect to the specified parameters. In one embodiment, this request/response exchange occurs at Layer-3 via RRC. In an alternative embodiment, at least one of the messages may be sent at Layer-2 via MAC. In another embodiment, L1 scheduling may provide implicit frequency-domain parameters to report on.

In further implementations, the ΔCQI_{FD} value may be the result of a combination of parameters that are reported separately, e.g., some of them reported at a higher layer and some of them reported at a lower layer. For example, the higher layer report is at Layer-3 or Layer-2. In another example, the lower layer report is at Layer-1 or Layer-2. In some instances, the higher layer report may include an activation index with each constraint that is reported (thereby grouping the constraints into sets that are applied together). Amongst the constraints reported at an earlier time, only those constraints that are valid at a time at which they are selected via the corresponding activation indices are reported at the lower level. In other instances, a lower layer report may include a dB quantity that needs to be added to each entire CQI function that has been conveyed by earlier reports to reflect the up-to-date performance with respect to current signal conditions. In additional instances, the lower layer report may include a dB quantity that needs to be added to each ATP value that has been conveyed by earlier reports to reflect the up-to-date performance with respect to current signal conditions. In still other instances, the Layer-1 reporting may be a part of enhanced CSI reporting or a part of enhanced HARQ reporting that is piggybacking full-duplex status on HARQ feedback.

For the purpose of ad-hoc reporting, at least one of the ΔCQI_{FD} or ATP, and/or their translations, may be reported per each UL transmission that is scheduled by multiplexing the report onto the UL payload. Ad-hoc reporting may occur when the UE has determined more refined information that can assist the interpolation performed by the link adaption feature of the gNodeB. In some implementations, such reporting may only take place with PUSCH transmissions. In other implementations, such reporting may only take place with physical uplink control channel (PUCCH) transmissions. In still other implementations, such reporting may take place with both physical uplink shared channel (PUSCH) and PUCCH transmissions. Accordingly, multiple options for reporting are configurable at RRC. The multiplexing onto the payload may be accomplished via Layer-2 reporting, by uplink control information (UCI) multiplexing of CQI information, or by UCI multiplexing of HARQ information.

In some instances, the reporting is only enabled for full-duplex scheduling. In other instances, the reporting may be enabled for both full-duplex and half-duplex uplink scheduling. In still other instances, the reporting may be enabled for half-duplex semi-static scheduling. Accordingly, selection between multiple options may be available by RRC configuration. Furthermore, a PUCCH payload may not need to be defined for the multiplexing, but the reporting is dropped if PUSCH is deprioritized. However, the report may be appended to a HARQ PUCCH payload.

In a second proposed procedure, an SBFD-UE may report the upper bound of a transmit power level of the UE for which a particular SINR loss target can be met with confidence, i.e., the ATP. The ATP or its baseline value may be reported at the Layer-3 (RRC) level or the Layer-2 (MAC) level. The SINR Loss target may be predefined by the UE, in which the predefinition may be performed per UE class. Alternatively, the SINR loss target may be reported by UE, in which the SINR loss target reported by UE may also vary in time. The ATP may be the UE's prediction based on input parameters and an a-priori or initial calibration. The inputs may comprise signal condition parameters and FDRA parameters. For example, the signal condition parameters may comprise the DL signal level at LNA input, the DL signal level at baseband, the AGC state, and/or the interference levels without simultaneously transmitting, i.e., without self-interference. The FDRA parameters may include the uplink Tx allocated bandwidth (TxBW), the Rx allocated bandwidth (RxBW), and/or the SIC guardband bandwidth.

In some instances, the definition of the ATP may be extended to a vector of {ATP_k}_k values by defining a vector of increasing SINR Loss values, in which each ATP_k value provides the bound for the respective SINR loss values and ATP_0 corresponds to the baseline definition. In other instances, such definition of ATP may be applied to an ATP or ATP_k with a particular value of k. It will be appreciated that the vector of {ATP_k}_k values and corresponding vector of increasing SINR loss values are defined as a piecewise linear function or a or B-spline function of SINR loss over the total transmit power level (dBm) of the UE. Accordingly, in one embodiment, the SINR loss function is assumed to be flat over Tx power level below the first representative point, e.g., at ATP. In another embodiment, the SINR Loss function is assumed to be flat over Tx power level after the last representative point. The ATP may be parametrized by one or more translations. For example, the ATP may be parametrized by two or more translations that are applied in sequence. In some instances, one or more translations may be reported at Layer-1 (PHY), and such reporting may be performed in combination with the reporting of one or more other translations at Layer-3 and/or Layer-2. In other instances, one or more translations may be reported at Layer-2 (PHY), and such reporting may be performed in combination with the reporting of one or more other translations at Layer-3.

In some implementations, the UE may report multiple versions of ATP and/or its translations together with a respective combination of FDRA parameters per each version. The parameters may include the transmission allocated bandwidth (TxBW), the reception allocated bandwidth (RxBW), the frequency separation between the closest edges of the two allocations (SIC guardband), their logarithms, sums, and/or differences defined in terms of them. In some instances, the TxBW includes frequency hopping. The reporting of such multiple versions may occur at Layer-3 or Layer-2. For example, the following tuple describes a constraint: (TxBW: 10 RBs, SIC GB: 12 RBs, RxBW: 20 RBs, translation by +1 dB), meaning that the ATP is obtained by translating the baseline ATP value by +1 dB for scheduling scenarios where TxBW is 10 RBs, SIC GB is 12 RBs, RxBW is 20 RBs. However, further translations are not precluded. The baseline ATP value may be zero or a suitably pre-defined constant. Alternatively, the baseline ATP value is reported along with its translations. In one embodiment, only one parameter is considered: e.g., SIC guardband. In another embodiment, only two parameters are considered: e.g., the TxBW and the SIC guardband. For certain parameters, the values may be restricted to a predefined set, e.g., 1 RB, 2 RBs, 4 RBs, 8 RBs, etc. In various implementations, the parameters may be reported in RBs or in MHz.

In some instances, one or more of the parameters can take the value of "any", indicating that the respective function value or translation value reported together with this parameter is valid for any value of the particular parameter. For example, the following tuple describes a valid constraint (TxBW: any RBs, SIC GB: 12 RBs, RxBW: any, translation by +1 dB), meaning that ATP is obtained by translating the baseline ATP by +1 dB for scheduling scenarios where SIC GB: 12 RBs. However, further translations are not precluded.

Accordingly, the reported ATPs per multiple versions of the FDRA parameter combinations may provide, by application of predefined interpolation rules, reliable indications of the performance for FDRA parameter combinations outside the reported set. In various embodiments, the predefined interpolation rules may include a first interpolation rule that assumes that between two reported points, the partial derivative of the ATP with respect to Tx BW is constant, a second interpolation rule that assumes that between two reported points, the partial derivative of the ATP with respect to Rx BW is constant, a third interpolation rule that assumes that between two reported points, the partial derivative of the ATP with respect to SIC GB is constant, and/or a fourth interpolation rule that assumes that ATP is piecewise constant when only a single parameter changes. Furthermore, the reported ATP points are representative points of a tensor product B-spline interpolation and/or the SINR Loss or delta-CQI stays the same for all versions of the FDRA parameter.

However, other information may need to be reported when the CQI and the ATP are unpredictable. For example, when the CQI and the ATP are unpredictable below the lowest SIC guardband parameter that the UE reports on, a minimum SIC guardband may need to be specified. In another example, when the CQI and the ATP are unpredictable above the highest Tx BW parameter that the UE reports on, a maximum Tx BW may need to be specified.

In additional implementations, a network node, e.g., a gNodeB, may specify a list of frequency-domain parameters for the UE to report on the CQI, the ATP, or one or more translation values with respect to the specified parameters. In one embodiment, this request/response exchange occurs at Layer-3 via RRC. In an alternative embodiment, at least one of the messages may be sent at Layer-2 via MAC. In another embodiment, L1 scheduling may provide implicit frequency-domain parameters to report on.

In further implementations, the ATP value may be the result of a combination of parameters that are reported separately, e.g., some of them reported at a higher layer and some of them reported at a lower layer. For example, the higher layer report is at Layer-3 or Layer-2. In another example, the lower layer report is at Layer-1 or Layer-2. In some instances, the higher layer report may include an activation index with each constraint that is reported (thereby grouping the constraints into sets that are applied together). Amongst the constraints reported at an earlier time, only those constraints that are valid at a time at which they are selected via the corresponding activation indices are reported at the lower level. In other instances, a lower layer report may include a dB quantity that needs to be added to the SINR loss that has been conveyed by earlier reports to reflect the up-to-date performance with respect to current signal conditions. In additional instances, the lower layer report may include a dB quantity that needs to be added to each ATP value that has been conveyed by earlier reports to reflect the up-to-date performance with respect to current signal conditions.

In some alternative instances, the ATP may be reported implicitly through offsets that modify the Power Headroom (PHR) reported for half-duplex operation. For example, the ATP may limit P_CMAX for UL transmit power control (TPC) when full-duplex is selected. However, in an alternative instance, UL TPC is not affected by the ATP. The offset to PHR may be reported at Layer-2 as a new type of ATP. Alternatively, a Layer-1 report may convey a further offset to full-duplex PHR, in which the Layer-1 report conveys an activation index that selects between the full-duplex PHR offsets reported at Layer-2. In one embodiment, the UE may report at Layer-2 multiple full-duplex PHR offsets, each corresponding to a specific FDRA parameter combination. Alternatively, such FDRA parameter combinations are configured to the UE or reported by the UE at Layer-3 and/or Layer-2. The Layer-1 reporting may be a part of enhanced CSI reporting or enhanced HARQ reporting that is piggybacking the full-duplex status on HARQ feedback. In some implementations, the UE may guarantee that the SINR loss target is achieved with the nominal maximum transmit power level for a minimalist scheduling configuration, in which Tx and/or Rx bandwidth is limited and the SIC guardband is larger than a predefined value.

### Illustrative Implementations

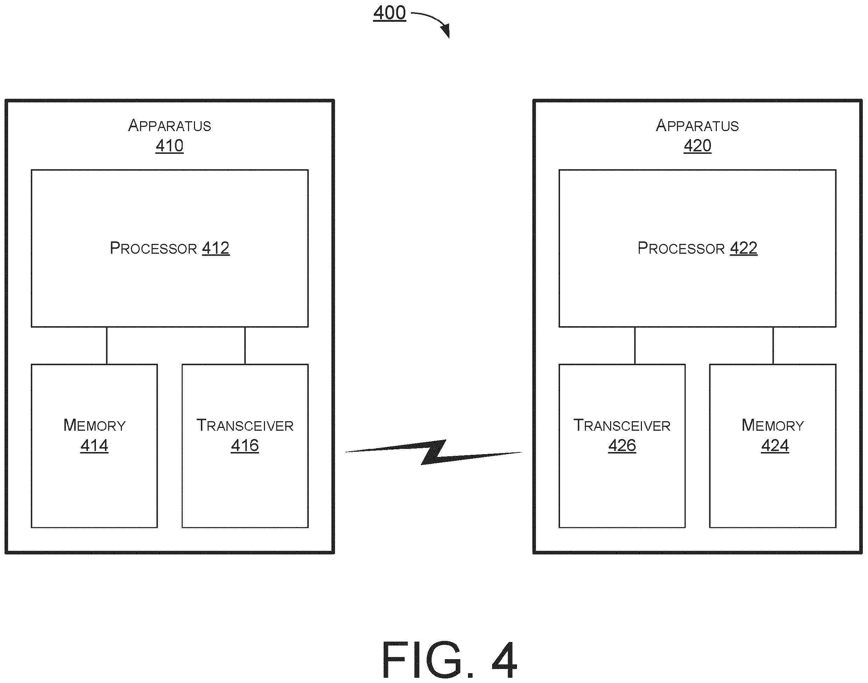

FIG. 4 illustrates an example communication system 400 having at least an example apparatus 410 and an example apparatus 420 in accordance with an implementation of the present disclosure. Each of apparatus 410 and apparatus 420 may perform various functions to implement schemes, techniques, processes and methods described herein pertaining to techniques for UE configuration and scheduling in SBFD networks, including the various schemes described above with respect to various proposed designs, concepts, schemes, systems and methods described above, including network environment 100, as well as processes described below.

Each of apparatus 410 and apparatus 420 may be a part of an electronic apparatus, which may be a network apparatus or a UE (e.g., UE 110), such as a portable or mobile apparatus, a wearable apparatus, a vehicular device or a vehicle, a wireless communication apparatus or a computing apparatus. For instance, each of apparatus 410 and apparatus 420 may be implemented in a smartphone, a smartwatch, a personal digital assistant, an electronic control unit (ECU) in a vehicle, a digital camera, or a computing equipment such as a tablet computer, a laptop computer or a notebook computer. Each of apparatus 410 and apparatus 420 may also be a part of a machine type apparatus, which may be an IoT apparatus such as an immobile or a stationary apparatus, a home apparatus, a roadside unit (RSU), a wire communication apparatus or a computing apparatus. For instance, each of apparatus 410 and apparatus 420 may be implemented in a smart thermostat, a smart fridge, a smart door lock, a wireless speaker or a home control center. When implemented in or as a network apparatus, apparatus 410 and/or apparatus 420 may be implemented in an eNodeB in an LTE, LTE-Advanced or LTE-Advanced Pro network or in a gNnodeB or TRP in a 5G network, a B5G network, an NR network or an IoT network.

In some implementations, each of apparatus 410 and apparatus 420 may be implemented in the form of one or more integrated-circuit (IC) chips such as, for example and without limitation, one or more single-core processors, one or more multi-core processors, one or more complex-instruction-set-computing (CISC) processors, or one or more reduced-instruction-set-computing (RISC) processors. In the various schemes described above, each of apparatus 410 and apparatus 420 may be implemented in or as a network apparatus or a UE. Each of apparatus 410 and apparatus 420 may include at least some of those components shown in FIG. 4 such as a processor 412 and a processor 422, respectively, for example. Each of apparatus 410 and apparatus 420 may further include one or more other components not pertinent to the proposed scheme of the present disclosure (e.g., internal power supply, display device and/or user interface device), and, thus, such component(s) of apparatus 410 and apparatus 420 are neither shown in FIG. 4 nor described below in the interest of simplicity and brevity.

In one aspect, each of processor 412 and processor 422 may be implemented in the form of one or more single-core processors, one or more multi-core processors, or one or more CISC or RISC processors. That is, even though a singular term "a processor" is used herein to refer to processor 412 and processor 422, each of processor 412 and processor 422 may include multiple processors in some implementations and a single processor in other implementations in accordance with the present disclosure. In another aspect, each of processor 412 and processor 422 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 412 and processor 422 is a special-purpose machine specifically designed, arranged, and configured to perform specific tasks including those pertaining to techniques for UE configuration and scheduling in SBFD networks in accordance with various implementations of the present disclosure.

In some implementations, apparatus 410 may also include a transceiver 416 coupled to processor 412. Transceiver 416 may be capable of wirelessly transmitting and receiving data. In some implementations, transceiver 416 may be capable of wirelessly communicating with different types of wireless networks of different radio access technologies (RATs). In some implementations, transceiver 416 may be equipped with a plurality of antenna ports (not shown) such as, for example, four antenna ports. That is, transceiver 416 may be equipped with multiple transmit antennas and multiple receive antennas for multiple-input multiple-output (MIMO) wireless communications. In some implementations, apparatus 420 may also include a transceiver 426 coupled to processor 422. Transceiver 426 may include a transceiver capable of wirelessly transmitting and receiving data. In some implementations, transceiver 426 may be capable of wirelessly communicating with different types of UEs/wireless networks of different RATs. In some implementations, transceiver 426 may be equipped with a plurality of antenna ports (not shown) such as, for example, four antenna ports. That is, transceiver 426 may be equipped with multiple transmit antennas and multiple receive antennas for MIMO wireless communications.

In some implementations, apparatus 410 may further include a memory 414 coupled to processor 412 and capable of being accessed by processor 412 and storing data therein. In some implementations, apparatus 420 may further include a memory 424 coupled to processor 422 and capable of being accessed by processor 422 and storing data therein. Each of memory 414 and memory 424 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 414 and memory 424 may include a type of read-only memory (ROM) such as mask ROM, programmable ROM (PROM), erasable programmable ROM (EPROM) and/or electrically erasable programmable ROM (EEPROM). Alternatively, or additionally, each of memory 414 and memory 424 may include a type of non-volatile random-access memory (NVRAM) such as flash memory, solid-state memory, ferroelectric RAM (FeRAM), magnetoresistive RAM (MRAM) and/or phase-change memory.

Each of apparatus 410 and apparatus 420 may be a communication entity capable of communicating with each other using various proposed schemes in accordance with the present disclosure. For illustrative purposes and without limitation, a description of capabilities of apparatus 410, as a UE (e.g., UE 110), and apparatus 420, as a network node (e.g., network node 126 or another network node implementing one or more network-side functionalities described above) of an application server side network (e.g., network 130 as a 5G/NR/B5G mobile network), is provided below.

In some proposed schemes in accordance with the present disclosure pertaining to techniques for UEs to report one or more SINR loss values and soft constraints on full-duplex scheduling to network nodes, processor 412 of apparatus 410, implemented in or as a UE (e.g., UE 110) may establish full-duplex communication between the UE and network node such that the apparatus is able to transmit data to the network node and receive data from the network node simultaneously in time. For example, processor 412 of apparatus 410 may exchange data with the processor 422 of apparatus 420 to establish the full-duplex communication. Subsequently, processor 412 may report to the network node information that includes one or more SINR loss values and one or more soft constraints on a full-duplex scheduling of communication resources that is performed by the network node during the full-duplex communication. In turn, the network node may apply the one or more SINR loss values and the one or more soft constraints to the full-duplex scheduling of communication resources for the UE.

In some instances, each SINR loss value may include at least one of a first differential quantity that indicates a degradation with respect to a wide-band channel quality indicator (CQI) indicated for a half-duplex operation or a second differential quantity that indicates a degradation with respect to a narrow-band CQI for the half-duplex operation.

In some implementations, processor 412 may predict a SINR loss value based on input parameters and an initial calibration, the input parameters including at least one of signal condition parameters and FDRA parameters, the signal condition parameters including one or more of DL signal level at an LNA input of the UE, a DL signal level at a baseband of the UE, an AGC state of the UE, or one or more measured interference levels without the UE simultaneously transmitting, and the FDRA parameters including one or more of a transmit allocated bandwidth, a receive allocated bandwidth, or a SIC guardband bandwidth.

In some implementations, processor 412 may estimate an upper bound of a SINR loss value as a piecewise linear function or a B-spline function of a total transmit power level of the UE, and report representative points of the piecewise linear function or the B-spline function at a Layer-2 level or a Layer-3 level. In some instances, the piecewise linear function or the B-spline function may be parameterized by an anchor point that is an ATP, in which the ATP is an upper bound of transmission power level by the UE for which a particular SINR loss target is met. In other instances in which the piecewise linear function or the B-spline function includes a horizontal transmit power level axis and a vertical SINR loss axis, further comprising parametrizing the piecewise linear function or the B-spline function by one or more translations on at least one of the horizontal transmit power level axis or the vertical SINR loss axis.

In some implementations, processor 412 may parameterize the piecewise linear function or the B-spline function by one or more translations acting on all representative points of the piecewise linear function or the B-spline function or parameterized by a translation acting on one or more representative points that have been reported, such that the reporting includes reporting each of the one or more translations is reported at a Layer-1 level or a Layer-2 level. In some instances, the reporting may further include reporting a combination of FDRA parameters that are associated with the representative points and one or more translations on the representative points of the piecewise linear function or the B-spline function as a soft constraint. In one scenario, the soft constraint may be one of a plurality of soft constraints that includes translations on multiple versions of the representative points, in which each of the plurality of soft constraints has a corresponding activation index that enables multiple constraints of the plurality of soft constraints that are valid at corresponding times of selection via corresponding activation indices for lower layer reporting to be grouped together for application by the network node, e.g., the processor 422 of apparatus 420.

In some implementations, processor 412 may report an ATP that is predicted by the UE based on input parameters and an initial calibration at a Layer-2 level or a Layer-3 level, the input parameters including at least one of signal condition parameters and FDRA parameters, and wherein the signal condition parameters include one or more of a DL signal level at an LNA input of the UE, a DL signal level at a baseband of the UE, a state of the UE, or one or more measured interference levels without the UE simultaneously transmitting, and the FDRA parameters include one or more of a transmit allocated bandwidth, a receive allocated bandwidth, or a SIC guardband bandwidth. In some instances, processor 412 may parameterize the ATP by one or more translations, such that the reporting further includes reporting the translations via a combination of Layer-1, Layer-2, and Layer-3, or a combination of Layer-2 and Layer 3.

In other instances, the reporting may include reporting a combination of frequency domain resource allocation (FDRA) parameters associated with the ATP and the one or more translations that are applied to the ATP as a soft constraint. In such instances, the FDRA parameters may be reported as a set of one or more values of a triplet and the one or more translations may be reported as a corresponding ATP offset via Layer-3, such that the set of one or more values with a corresponding ATP offset and one or more additional sets of one or more values of one or more additional triplets with one or more corresponding ATP offsets are used by the network node, e.g., the processor 422 of apparatus 420, to interpolate an estimated ATP offset for another set of one or more values of an arbitrary triplet.

In one scenario, the soft constraint may be one of a plurality of soft constraints that include translations on multiple versions of the ATP, in which each of the plurality of soft constraints has a corresponding activation index that enables multiple constraints of the plurality of soft constraints that are valid at corresponding times of selection via corresponding activation indices for lower layer reporting to be grouped together for application by the network node, e.g., the processor 422 of apparatus 420.

In some implementations, processor 412 may predict an ATP variation based on a DL signal level at the UE, one or more measured interference levels without the UE simultaneously transmitting, and a transmit-receive Tx-Rx echo level, such that the reporting includes reporting the ATP variation at Layer-1.

### Illustrative Process

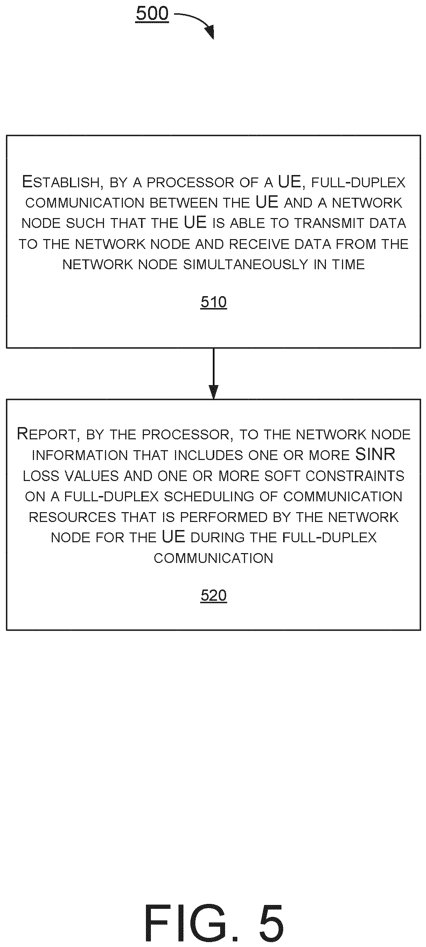

FIG. 5 is a flowchart of an example process 500 in accordance with an implementation of the present disclosure. The process 500 may represent an aspect of implementing various proposed designs, concepts, schemes, systems, and methods described above, whether partially or entirely, including those pertaining to those described above. More specifically, the process 500 may represent an aspect of the proposed concepts and schemes pertaining to techniques for UEs to report one or more SINR loss values and soft constraints on full-duplex scheduling to network nodes. The process 500 may include one or more operations, actions, or functions as illustrated by one or more blocks. Although illustrated as discrete blocks, various blocks of each process may be divided into additional blocks, combined into fewer blocks, or eliminated, depending on the desired implementation. Moreover, the blocks/sub-blocks of each process may be executed in the order shown in each figure or, alternatively in a different order. Furthermore, one or more of the blocks/sub-blocks of each process may be executed iteratively. The process 500 may be implemented by or in apparatus 410 and apparatus 420 as well as any variations thereof. Solely for illustrative purposes and without limiting the scope, the process 500 is described below in the context of apparatus 410 as a UE (e.g., UE 110) and apparatus 420 as a communication entity such as a network node or base station (e.g., network node 125 or another network node implementing one or more network-side functionalities described above) of an application server side network (e.g., network 130).

At 510, process 500 may include processor 412 of apparatus 410, implemented in or as a UE (e.g., UE 110), establishing full-duplex communication between apparatus 410 and apparatus 420 implemented in or as a network node (e.g., network node 125) such that the UE is able to transmit data to the network node and receive data from the network node simultaneously in time. For example, processor 412 of apparatus 410 may exchange data with the processor 422 of apparatus 420 to establish the full-duplex communication. Process 500 may proceed from 510 to 520.

At 520, the process 500 may include processor 412 reporting to the network node information that includes one or more SINR loss values and one or more soft constraints on a full-duplex scheduling of communication resources that is performed by the network node for the UE during the full-duplex communication. In turn, the network node may apply the one or more SINR loss values and the one or more soft constraints to the full-duplex scheduling of communication resources for the UE.

In some instances, each SINR loss value may include at least one of a first differential quantity that indicates a degradation with respect to a wide-band channel quality indicator (CQI) indicated for a half-duplex operation or a second differential quantity that indicates a degradation with respect to a narrow-band CQI for the half-duplex operation.

In some implementations, the process 500 may include processor 412 predicting a SINR loss based on input parameters and an initial calibration, the input parameters including at least one of signal condition parameters and FDRA parameters, the signal condition parameters including one or more of DL signal level at an LNA input of the UE, a DL signal level at a baseband of the UE, an AGC state of the UE, or one or more measured interference levels without the UE simultaneously transmitting, and the FDRA parameters including one or more of a transmit allocated bandwidth, a receive allocated bandwidth, or a SIC guardband bandwidth.

In some implementations, the process 500 may include processor 412 estimating an upper bound of a SINR loss value as a piecewise linear function or a B-spline function of a total transmit power level of the UE, and reporting representative points of the piecewise linear function or the B-spline function at a Layer-2 level or a Layer-3 level. In some instances, the piecewise linear function or the B-spline function may be parameterized by an anchor point that is an ATP, in which the ATP is an upper bound of transmission power level by the UE for which a particular SINR loss target is met. In other instances in which the piecewise linear function or the B-spline function includes a horizontal transmit power level axis and a vertical SINR loss axis, further comprising parametrizing the piecewise linear function or the B-spline function by one or more translations on at least one of the horizontal transmit power level axis or the vertical SINR loss axis.

In some implementations, the process 500 may include processor 412 parameterizing the piecewise linear function or the B-spline function by one or more translations acting on all representative points of the piecewise linear function or the B-spline function or parameterized by a translation acting on one or more representative points that have been reported, such that the reporting includes reporting each of the one or more translations is reported at a Layer-1 level or a Layer-2 level. In some instances, the reporting may further include reporting a combination of FDRA parameters that are associated with the representative points and one or more translations on the representative points of the piecewise linear function or the B-spline function as a soft constraint. In one scenario, the soft constraint may be one of a plurality of soft constraints that includes translations on multiple versions of the representative points, in which each of the plurality of soft constraints has a corresponding activation index that enables multiple constraints of the plurality of soft constraints that are valid at corresponding times of selection via corresponding activation indices for lower layer reporting to be grouped together for application by the network node, e.g., the processor 422 of apparatus 420.

In some implementations, the process 500 may include processor 412 reporting an ATP that is predicted by the UE based on input parameters and an initial calibration at a Layer-2 level or a Layer-3 level, the input parameters including at least one of signal condition parameters and FDRA parameters, and wherein the signal condition parameters include one or more of a DL signal level at an LNA input of the UE, a DL signal level at a baseband of the UE, a state of the UE, or one or more measured interference levels without the UE simultaneously transmitting, and the FDRA parameters include one or more of a transmit allocated bandwidth, a receive allocated bandwidth, or a SIC guardband bandwidth. In some instances, the process 500 may include processor 412 parameterizing the ATP by one or more translations, such that the reporting further includes reporting the translations via a combination of Layer-1, Layer-2, and Layer-3, or a combination of Layer-2 and Layer 3.

In other instances, the reporting may include reporting a combination of frequency domain resource allocation (FDRA) parameters associated with the ATP and the one or more translations that are applied to the ATP as a soft constraint. In such instances, the FDRA parameters may be reported as a set of one or more values of a triplet and the one or more translations may be reported as a corresponding ATP offset for the set of one or more values via Layer-3, such that the set of one or more values with a corresponding ATP offset and one or more additional sets of one or more values of one or more additional triplets with one or more corresponding ATP offsets are used by the network node, e.g., the processor 422 of apparatus 420, to interpolate an estimated ATP offset for another set of one or more values of an arbitrary triplet.

In one scenario, the soft constraint may be one of a plurality of soft constraints that include translations on multiple versions of the ATP, in which each of the plurality of soft constraints has a corresponding activation index that enables multiple constraints of the plurality of soft constraints that are valid at corresponding times of selection via corresponding activation indices for lower layer reporting to be grouped together for application by the network node, e.g., the processor 422 of apparatus 420.

In some implementations, the process 500 may include processor 412 predicting an ATP variation based on a DL signal level at the UE, one or more measured interference levels without the UE simultaneously transmitting, and a transmit-receive Tx-Rx echo level, such that the reporting includes reporting the ATP variation at Layer-1.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope and spirit of the present disclosure. Accordingly, the various implementations disclosed herein are not intended to be limiting, with the true scope and spirit being indicated by the following claims.

## Claims

1. A method, comprising:
establishing, via at least a user equipment (UE), full-duplex communication between the UE and a network node such that the UE is able to transmit data to the network node and receive data from the network node simultaneously in time; and
reporting by the UE to the network node, information that includes one or more signal-to-Interference-plus-noise ratio (SINR) loss values and one or more soft constraints on a full-duplex scheduling of communication resources that is performed by the network node for the UE during the full-duplex communication.

2. The method of Claim 1, wherein each SINR loss value includes at least one of a differential quantity that indicates a degradation with respect to a wide-band channel quality indicator (CQI) indicated for a half-duplex operation or a differential quantity that indicates a degradation with respect to a narrow-band CQI for the half-duplex operation.

3. The method of any one of Claims 1 or 2, wherein a SINR loss is predicted by the UE based on input parameters and an initial calibration, the input parameters including at least one of signal condition parameters and frequency domain resource allocation (FDRA) parameters, the signal condition parameters including one or more of a downlink (DL) signal level at a low noise amplifier (LNA) input of the UE, a DL signal level at a baseband of the UE, an automatic gain control (AGC) state of the UE, or one or more measured interference levels without the UE simultaneously transmitting, and the FDRA parameters including one or more of a transmit allocated bandwidth, a receive allocated bandwidth, or a self-interference cancellation (SIC) guardband bandwidth.

4. The method of any one of Claims 1 to 3, further comprising estimating an upper bound of a SINR loss as a piecewise linear function or a B-spline function of a total transmit power level of the UE, and reporting representative points of the piecewise linear function or the B-spline function at a Layer-2 level or a Layer-3 level.

5. The method of claim 4, wherein the piecewise linear function or the B-spline function is parameterized by an anchor point that is an admissible transmission power (ATP), in which the ATP is an upper bound of transmission power level by the UE for which a particular SINR loss target is met.

6. The method of any one of Claims 4 or 5, wherein the piecewise linear function or the B-spline function includes a horizontal transmit power level axis and a vertical SINR loss axis, further comprising parametrizing the piecewise linear function or the B-spline function by one or more translations on at least one of the horizontal transmit power level axis or the vertical SINR loss axis;
and/or the method further comprising parameterizing the piecewise linear function or the B-spline function by one or more translations acting on all representative points of the piecewise linear function or the B-spline function or parameterized by a translation acting on one or more representative points that have been reported, and wherein the reporting includes reporting each of the one or more translations is reported at a Layer-1 level or a Layer-2 level.

7. The method of any one of Claims 4 to 6, wherein the reporting further includes reporting a combination of frequency domain resource allocation (FDRA) parameters that are associated with the representative points and one or more translations on the representative points of the piecewise linear function or the B-spline function as a soft constraint;
for example, wherein the soft constraint is one of a plurality of soft constraints that includes translations on multiple versions of the representative points, and wherein each of the plurality of soft constraints has a corresponding activation index that enables multiple constraints of the plurality of soft constraints that are valid at corresponding times of selection via corresponding activation indices for lower layer reporting to be grouped together for application by the network node.

8. The method of any one of Claims 1 to 7, wherein the reporting includes reporting an admission transmit power (ATP) that is predicted by the UE based on input parameters and an initial calibration at a Layer-2 level or a Layer-3 level, the input parameters including at least one of signal condition parameters and frequency domain resource allocation (FDRA) parameters, and wherein the signal condition parameters include one or more of a downlink (DL) signal level at an low noise amplifier (LNA) input of the UE, a DL signal level at a baseband of the UE, an automatic gain control (AGC) state of the UE, or one or more measured interference levels without the UE simultaneously transmitting, and the FDRA parameters include one or more of a transmit allocated bandwidth, a receive allocated bandwidth, or a self-interference cancellation (SIC) guardband bandwidth.

9. The method of Claim 8, further comprising parameterizing the ATP by one or more translations, and wherein the reporting further includes reporting the translations via a combination of Layer-1, Layer-2, and Layer-3, or a combination of Layer-2 and Layer 3.

10. The method of claim 9, wherein the reporting further includes reporting a combination of frequency domain resource allocation (FDRA) parameters associated with the ATP and the one or more translations that are applied to the ATP as a soft constraint;
wherein, for example, the FDRA parameters are reported as a set of one or more values of a triplet and the one or more translations are reported as a corresponding ATP offset for the set of one or more values via Layer-3;
wherein, for example, the set of one or more values with a corresponding ATP offset and one or more additional sets of one or more values of one or more additional triplets with one or more corresponding ATP offsets are used by the network node to interpolate an estimated ATP offset for another set of one or more values of an arbitrary triplet.

11. The method of Claim 10, wherein the soft constraint is one of a plurality of soft constraints that include translations on multiple versions of the ATP, and wherein each of the plurality of soft constraints has a corresponding activation index that enables multiple constraints of the plurality of soft constraints that are valid at corresponding times of selection via corresponding activation indices for lower layer reporting to be grouped together for application by the network node.

12. The method of any one of Claims 8 to 11, further comprising predicting an ATP variation based on a downlink (DL) signal level at the UE, one or more measured interference levels without the UE simultaneously transmitting, and a transmit-receive (Tx-Rx) echo level, wherein the reporting includes reporting the ATP variation at Layer-1.

13. An apparatus implementable in a network as a user equipment (UE), comprising:
a transceiver configured to communicate with one or more network nodes of the network; and
a processor coupled to the transceiver and configured to perform operations comprising:
establishing full-duplex communication between UE and a network node such that the UE is able to transmit data to the network node and receive data from the network node simultaneously in time; and
reporting by the UE to the network node, information that includes one or more signal-to-Interference-plus-noise ratio (SINR) loss values and one or more soft constraints on a full-duplex scheduling of communication resources that is performed by the network node for the UE during the full-duplex communication.

14. The apparatus of Claim 13, wherein a SINR loss is predicted by the UE based on input parameters and an initial calibration, the input parameters including at least one of signal condition parameters and frequency domain resource allocation (FDRA) parameters, the signal condition parameters including one or more of a downlink (DL) signal level at a low noise amplifier (LNA) input of the UE, a DL signal level at a baseband of the UE, an automatic gain control (AGC) state of the UE, or one or more measured interference levels without the UE simultaneously transmitting, and the FDRA parameters including one or more of a transmit allocated bandwidth, a receive allocated bandwidth, or a self-interference cancellation (SIC) guardband bandwidth.

15. The apparatus of any one of Claims 13 or 14, wherein the reporting includes reporting an admission transmit power (ATP) that is predicted by the UE based on input parameters and an initial calibration at a Layer-2 level or a Layer-3 level, the input parameters including at least one of signal condition parameters and frequency domain resource allocation (FDRA) parameters, and wherein the signal condition parameters include one or more of a downlink (DL) signal level at a low noise amplifier (LNA) input of the UE, a DL signal level at a baseband of the UE, an automatic gain control (AGC) state of the UE, or one or more measured interference levels without the UE simultaneously transmitting, and the FDRA parameters include one or more of a transmit allocated bandwidth, a receive allocated bandwidth, or a self-interference cancellation (SIC) guardband bandwidth;
wherein, for example, the apparatus further comprises parameterizing the ATP by one or more translations, and wherein the reporting further includes reporting the translations via a combination of Layer-1, Layer-2, and Layer-3, or a combination of Layer-2 and Layer 3.
